# EUROPEAN PATENT APPLICATION

(11) **EP 4 572 130 A1**
(43) Date of publication of application: **18.06.2025**
(21) Application number: 23852196.7
(22) Date of filing: 17.05.2023
(51) Int. Cl.: H02P 29/00

(54) **MOTOR CONTROL DEVICE AND METHOD**

(30) Priority: 08.08.2022 JP 2022126614
(71) Applicant: Hitachi Industrial Equipment Systems Co., Ltd., Tokyo 101-0021 (JP)
(72) Inventor: KONDO, Terutomo, Tokyo 101-0021 (JP); UEI, Yusuke, Tokyo 101-0021 (JP); TAKANO, Yuuri, Tokyo 101-0021 (JP)
(74) Representative: MERH-IP Matias Erny Reichl Hoffmann Patentanwälte PartG mbB
(86) International application number: PCT/JP2023/018479
(87) International publication number: WO 2024/034211

(57) **Abstract**

To provide a technique capable of adjusting a control parameter also between a motion control system and a low-order system for a motor control apparatus. A controller 10 in a motion control system 1 inputs a motion control deviation A2 based on computation of a motion control command A1 and a motion control response A4 into a first control device 51, and outputs a servo control command A3 based on a first control gain. A servo amplifier 20 as a motor control apparatus includes a second control device 52, a power converter 23, and a control gain estimator 27. The motor control apparatus inputs a signal based on the servo control command A3 and the motion control response A4 into the second control device 52, inputs a signal output from the second control device 52 into the power converter 23, and supplies a motor 30 with a signal output from the power converter 23. The control gain estimator 27 inputs the servo control command A3 and the motion control deviation A2 or the motion control command A1 therein and estimates the first control gain.

## Description

### TECHNICAL FIELD

The present disclosure relates to a motor control apparatus for driving and controlling a motor, particularly to a technique such as a servo amplifier for performing servo control.

### BACKGROUND ART

A servo amplifier (or servo driver or the like) as a motor control apparatus connected to a motor has a function to perform servo control of the motor. Note that a system or apparatus including a motor and a servo amplifier may be described as a servo motor, a servo motor system, or the like.

Many applications or systems incorporate a servo motor therein. Control parameters are fitted in many applications, thereby achieving higher efficiency or higher response. However, expertise and experience are required for fitting (or adjusting or setting) control parameters. Further, it may take a long time even for a person who has expertise and experience to perform the fitting.

A related art for adjusting control parameters of a servo motor is disclosed in Japanese Patent Application Laid-Open Publication No. 2003-204689 (Patent Document 1). Patent Document 1 describes, for a servo motor control apparatus, that "a time to position is shortened also during auto-tuning," "a control gain is set depending on an operation situation of a servo motor such that a position-proportional gain Kp, a speed-proportional gain Kv, and estimated load inertia J have a relationship of Kp < (Kv/J)/4 when the motor speed is less than a set speed," and the like.

### RELATED ART DOCUMENT

### PATENT DOCUMENT

Patent Document 1: Japanese Patent Application Laid-Open Publication No. 2003-204689

### SUMMARY OF THE INVENTION

### PROBLEMS TO BE SOLVED BY THE INVENTION

A servo amplifier as a motor control apparatus is required to more easily fit or adjust control parameters, thereby achieving higher efficiency or higher response of a system.

Patent Document 1 as a related art describes, by way of example, that a servo motor system estimates/adjusts control parameters only therein, but does not describe a method of estimating/adjusting control parameters between the servo motor system and a motion control system such as an application or a controller.

For the explanation, it is assumed that a servo motor system (or a motor and a servo amplifier) or a servo amplifier is in a low-order system (or low-order apparatus) and an application, a controller, or the like using/controlling the servo motor system is in a motion control system (or motion apparatus). The low-order system is connected to the motion control system thereby to configure an entire system. In the system, the controller or the like in the motion control system gives a command to the servo amplifier in the low-order system, and the servo amplifier drives and controls the motor in response to the command.

However, the motion control system and the low-order system are separately managed, and only the low-order system may be mainly operable. In this case, the servo motor system in the low-order system can adjust control parameters only within the low-order system. With a method as in the related art, control parameters of the motion control system are difficult to adjust for the servo motor system in the low-order system. As exemplary management, a supplier manufactures/sells and maintains the servo amplifier, for example. In contrast to the supplier, a client manages the application, the controller (such as a programable logic controller), or the like in the motion control system such as a manufacturing system in a factory.

Unit systems of control parameters may be different between the controller or the like in the motion control system and the servo amplifier in the low-order system. In this case, control parameters in a different unit system are difficult to adjust for the servo motor system in the low-order system. A parameter tuning method as in the related art is effective only when the motion control system and the low-order system coordinate or when the motion control system is also operable and the same unit system is employed therebetween.

Thus, when the motion control system and the low-order system are separately managed and only the low-order system is mainly operable, control parameters of the servo amplifier are adjusted only in the low-order system and the control parameters cannot be adjusted in the motion control system. Further, in order to eliminate a mismatch in unit systems between the motion control system and the low-order system, control parameters are to be manually adjusted, which is less efficient.

An object of the present disclosure is to provide a technique capable of adjusting control parameters of a servo amplifier in a servo motor system, or a motor control apparatus in both a motion control system and a low-order system which are separately managed.

### MEANS FOR SOLVING THE PROBLEMS

A representative aspect of an embodiment of the present disclosure has the following configuration. A motor control apparatus according to an aspect of an embodiment is a motor control apparatus that drives and controls a motor in response to a servo control command from a motion control system. The motion control system includes a first control device in which a first control gain for servo control is set, inputs, into the first control device, a motion control deviation obtained by computing a motion control command and a motion control response based on a signal from the motor, and outputs the servo control command based on the first control gain. The motor control apparatus includes a second control device for the servo control, a power converter configured to generate a signal for driving the motor, and a control gain estimator configured to estimate the first control gain of the first control device. The motor control apparatus inputs a signal based on the servo control command and the motion control response into the second control device, inputs a signal output from the second control device into the power converter, and supplies the motor with a signal output from the power converter. The control gain estimator inputs the servo control command and the motion control deviation or the motion control command therein, estimates the first control gain, and outputs an estimated first control gain as an estimation result.

### EFFECTS OF THE INVENTION

According to the representative aspect of an embodiment of the present disclosure, control parameters can be adjusted even between a motion control system and a low-order system which are separately managed in a servo amplifier in a servo motor system or in a motor control apparatus. Other objects, configurations, effects, and the like will be described in DETAILED DESCRIPTION OF PREFERRED EMBODIMENTS.

### BRIEF DESCRIPTIONS OF THE DRAWINGS

[FIG. 1] illustrates a configuration of a system including a motor control apparatus according to a first embodiment.
[FIG. 2] illustrates a configuration example of the motor control apparatus according to the first embodiment as a computer system.
[FIG. 3] illustrates a configuration example of a user interface for the motor control apparatus according to the first embodiment.
[FIG. 4] illustrates other configuration example of the user interface for the motor control apparatus according to the first embodiment.
[FIG. 5] illustrates still other configuration example of the user interface for the motor control apparatus according to the first embodiment.
[FIG. 6] illustrates an example of screen display of a graphical user interface (GUI) for the motor control apparatus according to the first embodiment.
[FIG. 7] illustrates a functional block configuration example in a first control mode for position control in the motor control apparatus according to the first embodiment.
[FIG. 8] illustrates a functional block configuration example in a second control mode for speed control (particularly when a controller includes only a speed control device) in the motor control apparatus according to the first embodiment.
[FIG. 9] illustrates a functional block configuration example in a second control mode for speed control (particularly when the controller includes a position control device and a speed control device) in the motor control apparatus according to the first embodiment.
[FIG. 10] illustrates a process flow of estimating a control gain in P control for position control in the motor control apparatus according to the first embodiment.
[FIG. 11] illustrates a process flow of estimating a control gain in PI control for position control in the motor control apparatus according to the first embodiment.
[FIG. 12] illustrates an example of full-closed control structure as a modification of the first embodiment.
[FIG. 13] illustrates an example of sensor-less control structure as a modification of the first embodiment.
[FIG. 14] illustrates a configuration of the system including the motor control apparatus according to a second embodiment.
[FIG. 15] illustrates a process flow of estimating a control gain in P control for position control in the motor control apparatus according to the second embodiment.
[FIG. 16] illustrates a functional block configuration example in a pseudo driving mode in a modification of the second embodiment.

### DETAILED DESCRIPTION OF PREFERRED EMBODIMENTS

Embodiments according to the present disclosure will be described below in detail with reference to the drawings. Similar components are denoted with the same reference numerals throughout the drawings and will not be repeatedly described. Components may not be illustrated in actual positions, sizes, shapes, ranges, and the like in the drawings for simply illustrating the invention.

Program processing may be described as needed assuming an operator such as a program, a function, or a processing section performs processing, but hardware as an operator is a processor, or a controller, an apparatus, a calculator, a system, and the like which are configured of the processor and the like. The processor causes the calculator to perform processing according to a program read on a memory while using resources such as a memory or a communication interface as needed. Thereby, predetermined functions, processing sections, and the like are implemented. The processor is configured of a semiconductor device such as a CPU/MPU or a GPU, or the like. Processing may be performed not only by software programs but also in dedicated circuits. The dedicated circuits may be FPGA, ASIC, CPLD, and the like.

Programs may be pre-installed as data in intended calculators or may be distributed as data from program sources into intended calculators. The program sources may be program distribution servers on a communication network, or non-transitory computer readable storage mediums such as a memory card or a disc. A program may be configured of a plurality of modules. A computer system may be configured of a plurality of apparatuses. A computer system may be a client-server system, a Cloud computing system, an IoT system, or the like. Various items of data or information are in the form of table, list, or the like, for example, but are not limited thereto. The expressions of identification information, identifiers, IDs, names, numbers, and the like may be exchangeable.

### <First Embodiment>

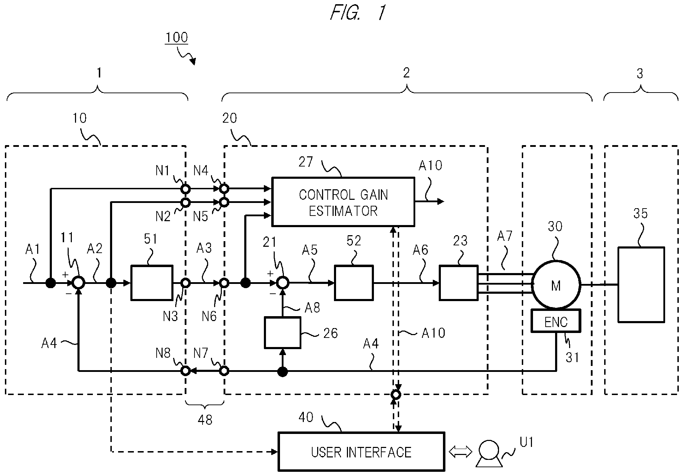

A motor control apparatus and the like according to a first embodiment of the present disclosure will be described with reference to FIG. 1 and the like.

### [Outline and others]

As illustrated in FIG. 1, for example, a controller 10 in a motion control system 1 and a servo amplifier 20 (or motor control apparatus) in a servo motor system as a low-order system 2 are connected to configure an entire system 100. The system 100 may be a power conversion system, a manufacturing system, or the like which implements operations of manufacturing processes and the like by use of motor-driven power, for example.

The controller 10 in the motion control system 1 generates a motion control command A1. The controller 10 generates a servo control command A3 based on the motion control command A1, and outputs/transmits the servo control command A3 to the servo amplifier 20, and the servo amplifier 20 receives/inputs the servo control command A3 therein to drive and control a motor 30.

More specifically, the controller 10 receives/inputs therein, as a feedback signal, a response indicating the position or speed of the motor 30 as a motion control response A4 from the low-order system 2. The servo amplifier 20 generates/outputs the signal indicating the position or speed of the motor 30 as the motion control response A4 based on a signal output from an encoder 31 attached to the motor 30, for example. The controller 10 computes the motion control command A1 and the motion control response A4 by a computing device 11 to generate a motion control deviation A2. The controller 10 includes a first control device 51 with a first control gain set, and generates/outputs the servo control command A3 by the first control device 51 based on the motion control deviation A2.

The servo amplifier 20 includes a power converter 23 for performing power conversion to drive the motor 30 in response to the servo control command A3. The servo amplifier 20 further includes a second control device 52 for giving a signal to the power converter 23 in response to the servo control command A3. The servo amplifier 20 further includes a differentiator 26 for differentiating a signal from the motor 30. The servo amplifier 20 inputs, into the second control device 52, a signal A5 as a result of computation, by a computing device 21, of the servo control command A3 and a signal A8 obtained by differentiating a signal (motion control response A4) from the motor 30. A signal A6 output from the second control device 52 is input into the power converter 23 and a power-converted signal A7 is supplied to the motor 30.

The servo amplifier 20 further includes a control gain estimator 27 for estimating the first control gain of the first control device 51 based on the motion control deviation A2 and the servo control command A3. The servo amplifier 20 acquires the motion control deviation A2 or the motion control command A1. The control gain estimator 27 estimates the first control gain of the first control device 51 based on the motion control deviation A2 or the motion control command A1 and the servo control command A3, and stores/outputs a signal of an estimated control gain A10 as an estimation result.

The present inventors have devised a new mechanism to estimate a control gain in the controller 10 in the motion control system 1 from the servo amplifier 20 in the low-order system 2. The servo amplifier 20 in the low-order system 2 is a motor control apparatus according to the first embodiment, and estimates the control gain of the first control device 51 as a control parameter in the controller 10 in the motion control system 1. The motor control apparatus according to the first embodiment and a user U1 can adjust control parameters in the servo amplifier 20 or control parameters of the entire system 10 including the motion control system 1 and the low-order system 2 by use of the estimated control gain A10.

### [System Including Motor Control Apparatus]

FIG. 1 illustrates a configuration of the entire system including the motor control apparatus according to the first embodiment. The system 100 of FIG. 1 includes the motion control system 1, the low-order system 2, and a system 3 to be controlled. The motion control system 1 includes the controller 10. The low-order system 2 includes the servo amplifier 20 as a motor control apparatus according to the first embodiment, and the motor 30 electrically connected to the servo amplifier 20. The system 3 to be controlled includes an apparatus 35 to be controlled electrically connected to the motor 30.

The controller 10 in the motion control system 1 and the servo amplifier 20 in the low-order system 2 are mostly implemented by software program processing. The controller 10 can be implemented by a programable logic controller, for example.

The apparatus 35 to be controlled is a driver driven by the motor 30. The apparatus 35 to be controlled may be industrial equipment installed in a client's factory, for example. In FIG. 1, the motor 30 is equipped with, as a sensor, the encoder 31 such as a rotary encoder. Additionally, the apparatus 35 to be controlled may also be equipped with a sensor such as an encoder (modification described below).

In the first embodiment, the motion control system 1 and the low-order system 2 are separately managed, where a client manages the motion control system 1 and a supplier manages the low-order system 2. The supplier manufactures/sells/maintains the servo amplifier 20, for example. The user U1 as a supplier adjusts the control parameters of the servo amplifier 20, for example. The supplier cannot operate the controller 10 and the like in the motion control system 1 belonging to the client in principle.

In other words, the controller 10 in the motion control system 1 is a motion controller. The controller 10 corresponds to a control section of the system 100 into which the servo amplifier 20 and the motor 30 are incorporated, and gives the servo control command A3 to the servo amplifier 20.

The servo amplifier 20 is a motor control apparatus for performing servo control on the motor 30 in response to the servo control command A3 from the controller 10, and corresponds to a power conversion apparatus (not illustrated) for performing power conversion from power for commercial power supply into power for the motor 30.

If the motor 30 is capable of adjusting its speed by the servo amplifier 20 as a power conversion apparatus, it is applicable irrespective of specific type or structure, and is applicable to an induction motor, a PM motor, a linear motor, and the like, for example.

The servo amplifier 20 and the motor 30 have interoperable components. The servo amplifier 20 has control parameter settings depending on the configuration of the motor 30. The control parameters set in the servo amplifier 20 are for driving and controlling the motor 30.

Additionally, the supplier may provide the client with only the servo amplifier 20 as a product and may provide the client with a servo amplifier system as a product integrating the servo amplifier 20 and the motor 30 therein.

The low-order system 2 in the system 100 of FIG. 1 corresponds to a motor control system in a semi-closed control structure. The semi-closed control structure is configured such that a signal (the motion control response A4 in FIG. 1, or a signal from the encoder 31, for example) is acquired from the motor 30 and to control the motor 30. To the contrary, a full-closed control structure is configured such that a signal is acquired not from the motor 30 but from the apparatus 35 to be controlled to control the motor 30. The motor 30 is applicable also in the full-closed control structure as in a modification described below, not limited to the semi-closed control structure of FIG. 1.

Further, a three-phase AC structure for power conversion is employed between the servo amplifier 20 and the motor 30 in FIG. 1, but the power conversion is not limited to the three-phase AC structure when feedback control is employed to control the motor 30.

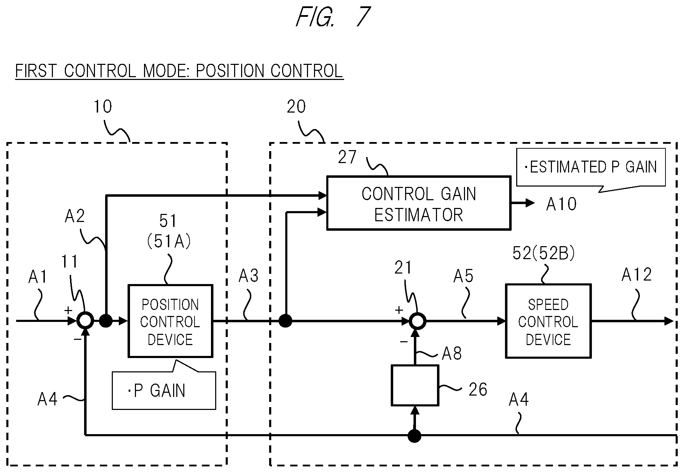

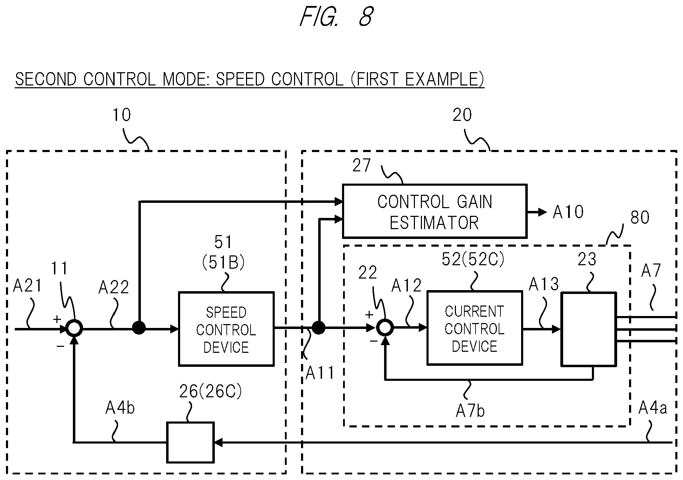

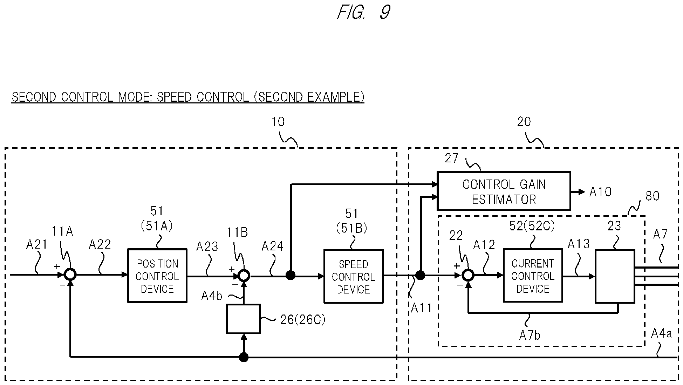

Specifically, the controller 10 may have either a position control function (FIG. 7 described below) and a speed control function (FIG. 8 and FIG. 9 described below). The servo amplifier 20 has a function for both the control functions.

The system 100 including the servo amplifier 20 includes a user interface 40. The user interface 40 has a function to monitor predetermined target objects and target information (at least the motion control deviation A2 and the estimated control gain A10) of the system 100, and the like. The user interface 40 further has a function to set the control gain estimator 27 in response to an operation of the user U1.

The user interface 40 is an interface for the user U1 using the servo amplifier 20. The user U1 may be a person in the supplier who maintains and manages the servo amplifier 20, for example, particularly a person who fits/adjusts the control parameters of the servo amplifier 20 according to the client's controller 10 and the entire system 100.

The controller 10 includes the computing device 11 and the first control device 51 as a feedback control device. Though not illustrated, the controller 10 includes a processor, a memory, a communication interface apparatus, and the like, and implements the computing device 11 and the first control device 51 through the program processing by the processor.

As illustrated in FIG. 1, in brief, the servo amplifier 20 according to the first embodiment is configured such that the control gain estimator 27 is added to the motor control system, that is, the computing device 21, the second control device 52, and the power converter 23. The control gain estimator 27 has a function to estimate the control gain set in the first control device 51 in the controller 10 in the motion control system 1.

The signals in FIG. 1 will be described. The controller 10 generates the motion control command A1. The motion control command A1 is to position the motor 30 in position control of the motor 30, for example.

The motion control response A4 is input from the servo amplifier 20 into the controller 10. The motion control response A4 is a response signal indicating the current position or speed of the motor 30 based on a signal from the encoder 31. The controller 10 computes the motion control command A1 and the motion control response A4 by the computing device 11. For example, in FIG. 1, the computing device 11 adds the motion control response A4 indicated as "-" (negative) input to the motion control command A1 indicated as "+" (positive) input and outputs the motion control deviation A2 as a computation result. The motion control deviation A2 is a signal indicating an error in the feedback control.

The controller 10 inputs the motion control deviation A2 as an input value into the first control device 51 and outputs the servo control command A3 as an output value therefrom. The motion control deviation A2 is multiplied by the control gain (or feedback gain) of the first control device 51 to generate the servo control command A3. The servo control command A3 output from the first control device 51 in the controller 10 is transmitted to the servo amplifier 20 and is input into the servo amplifier 20. In FIG. 1, the servo control command A3 is output from an output terminal N3 of the controller 10 and is input into an input terminal N6 of the servo amplifier 20.

The servo control command A3, which is received from the controller 10, is input into the servo amplifier 20. The servo amplifier 20 acquires the signal A8 obtained by differentiating the motion control response A4 by the differentiator 26. The servo amplifier 20 computes the servo control command A3 and the signal A8 by the computing device 21, and inputs the computed signal A5 as a command into the second control device 52. In FIG. 1, the computing device 21 adds the signal A8 indicated as "-" (negative) input to the servo control command A3 indicated as "+" (positive) input, and outputs the computed signal A5. The second control device 52 outputs the controlled signal A6 based on input of the signal A5. The power converter 23 generates/outputs the three-phase AC signal A7 for driving the motor 30 based on the signal A6 and supplied power. The motor 30 is driven in response to the signal A7.

The feedback signal from the motor 30 to the controller 10 and the servo amplifier 20 is generated by use of the encoder 31 of the motor 30 and the differentiator 26. The differentiator 26 corresponds to a speed detector. In FIG. 1, the motion control response A4 is output from an output terminal N7 of the servo amplifier 20 and is input into an input terminal N8 of the controller 10.

The control gain estimator 27 inputs therein the servo control command A3, and further inputs therein the motion control deviation A2 or the motion control command A1 in the example of FIG. 1. For example, the control gain estimator 27 performs a computation to estimate the control gain of the first control device 51 based on the motion control deviation A2 and the servo control command A3, and outputs a computation result or the estimated control gain A10 as a signal of the estimated control gain. A control gain which is estimated will be described as an estimated control gain in the explanation. The control gain estimator 27 stores the estimated control gain A10 in the memory resources of the servo amplifier 20.

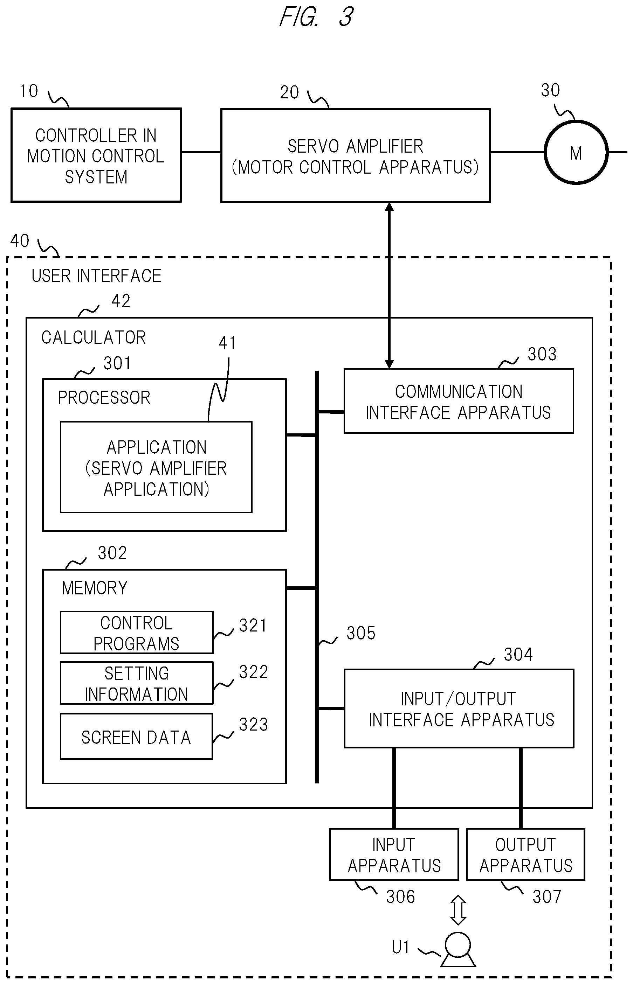

Further, the user interface 40 monitors the estimated control gain A10 by the control gain estimator 27. For example, an application 41 of FIG. 3 described below acquires the estimated control gain A10 output from the control gain estimator 27 and stores it in the memory resources of a calculator 42.

Further, the user interface 40 may monitor the motion control deviation A2 or the motion control command A1 of the controller 10. For example, the application 41 of FIG. 3 described below may acquire the motion control deviation A2 from an output terminal N2 of the controller 10. Further, the user interface 40 (the application 41, for example) may transmit and pass the monitored and acquired motion control deviation A2 to the control gain estimator 27. Alternatively, the user interface 40 may acquire, from the control gain estimator 27, the motion control deviation A2 acquired by the control gain estimator 27.

### [Computer System of Servo Amplifier]

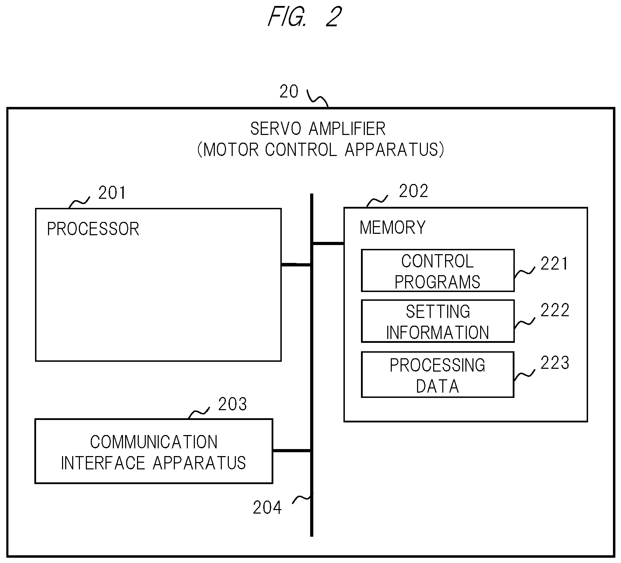

FIG. 2 illustrates a configuration example of the servo amplifier 20 as a computer system. The servo amplifier 20 includes a processor 201, a memory 202, a communication interface apparatus 203, a bus 204, and the like. The power converter 23 of FIG. 1 is implemented by program processing and an electric circuit, and other components are implemented by program processing.

The processor 201 performs processing according to control programs 221 in the memory 202, or software program processing or computation processing. Thereby, the components (other than the electric circuit of the power converter 23) such as the computing device 21, the second control device 52, and the control gain estimator 27 in the servo amplifier 20 of FIG. 1 are implemented. In other words, the program processing is performed so that the components such as the control gain estimator 27 are configured as execution modules in the servo amplifier 20.

The memory 202 stores therein the control programs 221, setting information 222, processing data 223, and the like. The control programs 221 are computer programs for causing the servo amplifier 20 to perform predetermined processing in order to implement predetermined functions. The setting information 222 is setting information for the control programs 221, or setting information for the control parameters (such as the control gain of a speed control device) of the servo amplifier 20. The processing data 223 is data/information used by the processor 201 as needed.

A communication interface with the controller 10, a communication interface with the user interface 40, and the like are mounted on the communication interface apparatus 203.

The servo amplifier 20 according to the first embodiment includes the programs (the control programs 221 of FIG. 2) for the respective functions, and performs processing of a program corresponding to a selected function. Additionally, each program may be pre-installed in the servo amplifier 20 or may be read from outside the servo amplifier 20, such as from an external storage medium or an external server apparatus as needed.

### [Feedback Control Method (Servo Control)]

A servo control method or a feedback control method in the motor control system including the first control device 51 in the controller 10 and the second control device 52 in the servo amplifier 20 is preset in the system 100 of FIG. 1. The servo control method may be typical categories and kinds of control such as position control and speed control, and the feedback control method may be P control, PI control, and the like (described below).

For the feedback control method for the first control device 51 and the like which is a premise to estimate the control gain in the control gain estimator 27, the feedback control method (control mode described below) is previously selected and set by the user U1 by use of the user interface 40 in the first embodiment. The application 41 (FIG. 3 described below) in the user interface 40 also has a function to set the feedback control method. Accordingly, the control gain estimator 27 has a function to estimate the control gain of the first control device 51 in the set feedback control method.

### [User Interface]

FIG. 3 illustrates a configuration example of the user interface 40. In the first embodiment, the user interface 40 includes the application 41 for the servo amplifier 20. The application 41 is an application program for providing the user U1 using the servo amplifier 20 with a graphical user interface (GUI) or the like, or a servo amplifier application. The application 41 is incorporated and installed in the calculator 42 such as a personal computer (PC) connected to the servo amplifier 20, for example. The application 41 corresponds to an application program with GUI having a function to set the control parameters for the servo amplifier 20.

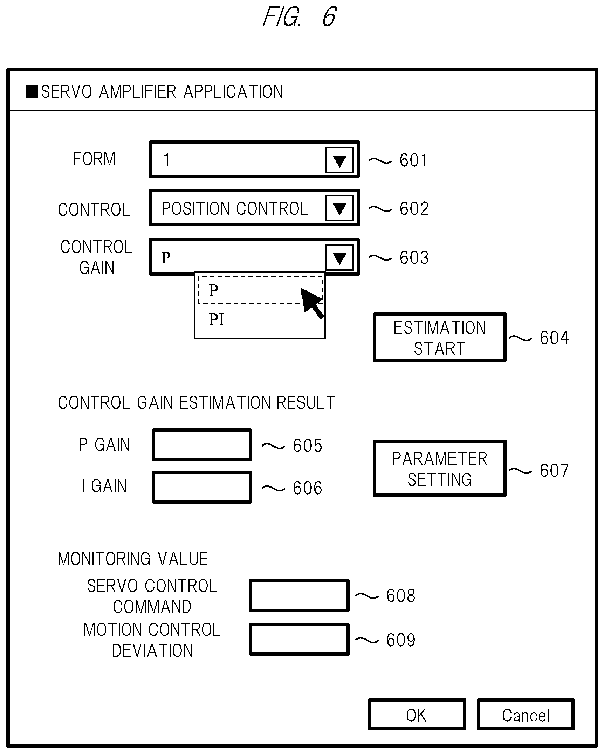

The application 41 configuring the user interface 40 of FIG. 3 has a function to provide a GUI screen and to set and monitor the control gain estimator 27 on the screen and a function to input an estimation execution instruction and the like in response to an operation of the user U1. The user U1 can perform various instruction operations or setting operations on the GUI screen (FIG. 6 described below) provided by the application 41.

The application 41 in the user interface 40 has a function to monitor a signal of the motion control deviation A2 of the controller 10 and a function to output/monitor the estimated control gain A10 of the control gain estimator 27 in the servo amplifier 20. The application 41 in the user interface 40 further has a function to display and confirm various parameter values for the servo amplifier 20 and the motor 30. More preferably, the application 41 in the user interface 40 may further have a function to monitor control statuses, failures, and the like of the motor 30, such as a function to monitor signals of the motion control response A4 and the like.

In the configuration example of FIG. 3, the calculator 42 such as a PC is included, and the calculator 42 includes a processor 301, a memory 302, a communication interface apparatus 303, an input/output interface apparatus 304, a bus 305, and the like. The processor 301 performs processing according to control programs 321 in the memory 302. Thereby, the application 41 is implemented. The application 41 operates as an execution module.

The memory 302 stores therein the control programs 321, setting information 322, screen data 323, and the like. The control programs 321 are computer programs for causing the calculator 42 to perform predetermined processing in order to implement predetermined functions, and include the programs for the application 41. The setting information 322 is setting information for the control programs 321 or user setting information. The screen data 323 is data/information of the GUI screen provided to the user U1 by the application 41, and the like.

The communication interface apparatus 303 mounts thereon a communication interface with the servo amplifier 20, a communication interface with the controller 10 when making communication with the controller 10, and the like. An input apparatus 306 and an output apparatus 307 are externally connected to the input/output interface apparatus 304. The input apparatus 306 may be a keyboard, a mouse, a microphone, or the like, for example. The output apparatus 307 may be a display, a printer, a speaker, or the like, for example. Additionally, an input/output apparatus may be incorporated in the calculator 42.

The calculator 42 of FIG. 3 is connected to the servo amplifier 20 via communication and may be placed close to or away from it. Further, a client terminal apparatus used by the user U1 may be connected to the calculator 42 via communication. That is, assuming the calculator 42 as a server apparatus, the user interface 40 may be configured as a client-server system between the calculator 42 as a server and the client terminal apparatus of the user U1. In this case, the user U1 operates the client terminal apparatus and accesses the calculator 42 as a server to use the application 42 by the calculator 42. The calculator 42 as a server generates a screen by the application 41 and transmits screen data and the like (such as a Web page) to the client terminal apparatus. The client terminal apparatus displays the GUI screen on the display based on the received screen data and the like.

Additionally, the application 41 of FIG. 3 may be incorporated and integrated in the servo amplifier 20.

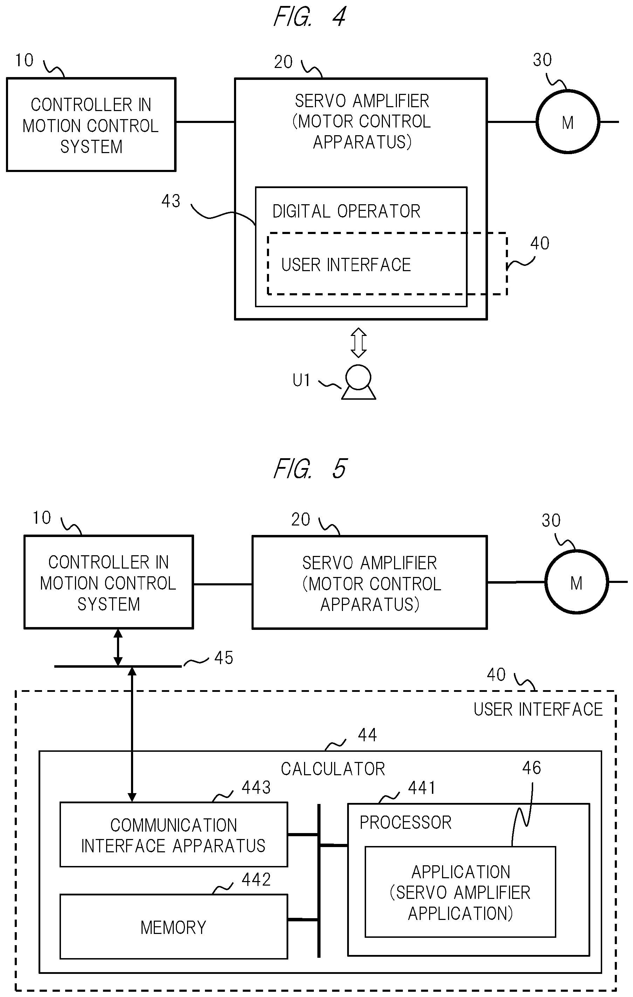

FIG. 4 illustrates other configuration example of the user interface 40. As in the example of FIG. 4, the user interface 40 may be mounted on a dedicated digital operator 43 attached to or incorporated in the servo amplifier 20. The digital operator 43 is provided as an input/output interface and an operation interface of the servo amplifier 20, and includes an operation panel, operation buttons, and the like. The digital operator 43 includes devices such as a liquid crystal display screen, buttons, and an LED lamp. The digital operator 43 may further include a touch panel and the like. In the example of FIG. 4, the functions of the user interface 40 are mounted on the digital operator 43. The digital operator 43 is connected to the components of the servo amplifier 20 of FIG. 1 or FIG. 2.

The digital operator 43 may display GUI or information on the liquid crystal display screen or the touch panel. For example, the monitoring values of the motion control deviation A2 and the like, or the output information of the estimated control gain A10 and the like are displayed on the screen of the digital operator 43, and the user U1 can see and confirm the information.

FIG. 5 illustrates still other configuration example of the user interface 40. As in the example of FIG. 5, the user interface 40 may be externally connected to or incorporated in the controller 10 in the motion control system 1. In the example of FIG. 5, a calculator 44 is included that is externally connected to the controller 10 in the motion control system 1 via a communication network 45. The communication network 45 may be LAN or WAN. An application 46 is installed in the calculator 44 managed by the supplier or the client. Though not illustrated in detail, the calculator 44 may be mounted on a PC or the like and includes a processor 441, a memory 442, a communication interface apparatus 443, and the like similarly to the calculator 42 of FIG. 3. In the example of FIG. 5, the application 46 in the calculator 44 makes communication with the controller 10 to monitor information from the controller 10, such as the motion control deviation A2.

Further, the controller 10 may acquire information such as the estimated control gain A10 from the servo amplifier 20 via communication and transmit it to the calculator 44.

Additionally, in still other configuration example of the user interface 40, a similar application may be mounted on a calculator connected to both the controller 10 and the servo amplifier 20 via communication.

### [Example of GUI Screen Display]

FIG. 6 illustrates an example of GUI screen display provided to the user U1 by the application 41 (FIG. 3, for example) in the user interface 40. The screen of FIG. 6 is provided in the form of a Web page, for example, but is not limited thereto. The example of screen of FIG. 6 includes items 601, 602, 603, a button 604, items 605, 606, a button 607, and items 608, 609. In item 601, "form" as a kind of control mode is selectable, and "form" corresponds to the functions of the first embodiment and the functions of the second embodiment. "form=1" is selected in this example.

In item 602, control can be selected from position control and speed control (described below). In item 603, a control gain to be estimated is selectable (described below). For example, when the user U1 operates the cursor as illustrated, a pull-down list box is displayed in item 603, P control and PI control are displayed as options in the list box, and the user U1 can select and input one from the list box. Button 604 is an estimation start button capable of inputting an instruction to make control gain estimation with designated form, control, and control gain.

Item 605 and item 606 are for displaying control gain estimation results (or the estimated control gain A10) by the control gain estimator 27, where estimated P gain is displayed in item 605 and estimated I gain is displayed in item 606 (described below). Further, button 607 makes it possible to proceed to the screen for setting/adjusting a control parameter of the servo amplifier 20. For example, when adjusting a control parameter while viewing the control gain estimation results, the user U1 presses button 607 to confirm/adjust the control parameter of the servo amplifier 20 (such as the control gain of the speed control device) on the following screen (not illustrated).

Items 608 and 609 are items for displaying the monitoring values by the monitoring function, where a value of the servo control command A3 is displayed in item 608 and a value of the motion control deviation A2 is displayed in item 609. The monitoring values may be displayed in real-time at each timing, or may be displayed in a time-series graph.

### [Function To Monitor Motion Control Deviation A2]

As the first example to mount the function to monitor the motion control deviation A2, the servo amplifier 20 may automatically monitor and store the motion control deviation A2 in the memory resources, and the monitoring values may not be output to the user U1. In the example of FIG. 1, the motion control deviation A2 flowing through the node before being input into the first control device 51 at the output side of the computing device 11 in the controller 10 is output from the output terminal N2, and a signal of the motion control deviation A2 is input into an input terminal N5 of the servo amplifier 20, and the signal of the motion control deviation A2 is input into the control gain estimator 27. The control gain estimator 27 (substantially the processor 201 of FIG. 2) temporarily stores the signal of the motion control deviation A2 in the memory resources (the memory 202 of FIG. 2) and then uses it for estimation computation.

As the second example to mount the function to monitor the motion control deviation A2, the monitoring value of the motion control deviation A2 may be output to the user U1. For example, the application 41 in the user interface 40 of FIG. 3 monitors the signal of the motion control deviation A2 of the controller 10 through the output terminal N2. The application 41 in the user interface 40 may transmit the monitored and acquired signal of the motion control deviation A2 to the control gain estimator 27 in the servo amplifier 20. The control gain estimator 27 receives/inputs the signal of the motion control deviation A2 therein, and uses it for estimation computation. Further, the application 41 in the user interface 40 displays the value of the monitored signal of the motion control deviation A2 on the GUI screen (FIG. 6) for the user U1.

### [Input Information of Control Gain Estimator]

Information input into the control gain estimator 27, such as signals or parameter values are basically two items of information of the servo control command A3 and the motion control deviation A2. In FIG. 1, the servo control command A3 is directly output and acquired from the controller 10. For example, the servo control command A3 output from the output terminal N3 of the controller 10 is input into the input terminal N6 of the servo amplifier 20, and the input servo control command A3 is input into the control gain estimator 27. The motion control deviation A2 is output from the output terminal N2 of the controller 10 and is input into the input terminal N5 to be acquired, for example, as described above. Alternatively, the motion control deviation A2 may be monitored by the user interface 40 to be acquired as described above.

A modification for input of the control gain estimator 27 may be as follows. In the modification, one item of information monitored/input by the servo amplifier 20 or the user interface 40 from the controller 10 is assumed as the motion control command A1 instead of the motion control deviation A2. For example, the servo amplifier 20 inputs therein and acquires, from an input terminal N4, the motion control command A1 output from an output terminal N1 of the controller 10. For example, the control gain estimator 27 inputs therein the motion control command A1 from the input terminal N4, and stores it in the memory resources. Alternatively, similarly as in the case of the motion control deviation A2, the application 41 in the user interface 40 may temporarily monitor and acquire the motion control command A1 from the controller 10 and may transmit the motion control command A1 to the servo amplifier 20, and the control gain estimator 27 may acquire the motion control command A1.

To the contrary, the motion control response A4 is output/input from/into the encoder 31 of the motor 30 to be acquired also in the servo amplifier 20. The control gain estimator 27 acquires a signal of the motion control response A4. The servo amplifier 20, particularly the control gain estimator 27 computes the acquired motion control command A1 and motion control response A4 (computing similar those of the computing device 11) thereby to acquire a value similar to that of the motion control deviation A2 (referred to here as motion control deviation calculated value in the explanation). Further, the control gain estimator 27 can perform control gain estimation computation by use of the motion control deviation calculated value and the servo control command A3.

FIG. 1 illustrates a configuration example in which both the motion control deviation A2 and the motion control command A1 are output/input between the controller 10 and the servo amplifier 20, but only one of them may be output/input as described above. Further, communication 48 between the controller 10 and the servo amplifier 20 is illustrated as communication made through a communication cable via the input/output terminals (such as the output terminal N3 and the input terminal N6) in FIG. 1, but is not limited thereto. Additionally, the input/output terminals for various signals in FIG. 1 may be reduced to fewer communication terminals depending on a communication interface.

### [Servo Control]

Servo control in the servo amplifier 20 as a motor control apparatus according to the first embodiment will be described below by way of P control and PI control for position control. In position control (FIG. 7 described below), the first control device 51 serves as a position control device and a control gain for position control is set. A control gain estimating/calculating method descried below is similarly applicable to speed control (FIG. 8 and the like described below) .

### [Position Control and Speed Control]

Position control and speed control in a broad sense are discussed in the first embodiment. Position control in a broad sense is to control position, speed, and current of the motor 30. Speed control in a broad sense is to control speed and current of the motor 30. In other words, the first embodiment discusses, for servo control of the motor 30 by the controller 10 and the servo amplifier 20, the first case (FIG. 7 described below) in which the controller 10 has position control (a position control device) in a narrow sense and the servo amplifier 20 has speed control (a speed control device) and current control and the second case in which the controller 10 has speed control (a speed control device) in a narrow sense and the servo amplifier 20 has current control. The second case further includes a case (FIG. 8 described below) in which the controller 10 has only speed control (a speed control device) and a case (FIG. 9 describe below) in which the controller 10 has position control (a position control device) and speed control (a speed control device), and may be either of the cases. The cases depend on the configuration of the motion control system 1. FIG. 7 and FIG. 9 are for position control in a broad sense and FIG. 8 is for speed control in a broad sense.

In the first embodiment, the servo amplifier 20 has a function to select and use control contents of the controller 10 from position control and speed control. The function is mounted on the application 41 (FIG. 3) in the user interface 40, for example. In the first embodiment, the servo amplifier 20 and the user interface 40 have, as control modes, a first control mode for position control and a second control mode for speed control. The user U1 can select and set the control mode from the first control mode for position control and the second control mode for speed control on the GUI screen (item 602 in FIG. 6). In other words, the control modes are for selecting control contents or a control device (the position control device or the speed control device) for the controller 10. The first control mode for position control is applied when the controller 10 has position control (a position control device 51A in FIG. 7), and the second control mode for speed control is applied when the controller 10 has speed control (a speed control device 51B in FIG. 8 and FIG. 9).

In the first embodiment, the servo amplifier 20 switches to and performs a program processing in a designated/set control mode. Thereby, the configuration of FIG. 1 as a configuration of execution modules serves as the configuration for position control of FIG. 7 (the servo amplifier 20 has a speed control device 52B for the first case in which the controller 10 has the position control device 51A) or the configuration for speed control of FIG. 8 (the servo amplifier 20 has a current control device 52C for the second case in which the controller 10 has only the speed control device 51B), for example.

### [P Control and PI Control]

The first embodiment additionally discusses P control and PI control as feedback control methods for servo control of the motor 30 by the controller 10 and the servo amplifier 20.

P control is proportion control (P: Proportion) in PID control and is directed toward operations in proportion to an error. The error is a difference between the motion control command A1 and the motion control response A4 in FIG. 1, or the motion control deviation A2. The operations are performed at the amount of operation obtained by multiplying the error by the control gain of the first control device 51.

PI control is proportional-integral control as a combination of P control and I control (I: Integral) in PID control. I control is directed toward integrating an error. The operations are performed at the amount of operation obtained by multiplying the integrated error (the motion control deviation A2) by the control gain.

### [First Control Mode: Position Control]

FIG. 7 illustrates a functional block configuration in the first control mode in which the controller 10 has position control based on the configuration of FIG. 1. Note that the motor 30, the encoder 31, the apparatus 35 to be controlled, the user interface 40, and the like in FIG. 1 are not illustrated in FIG. 7. FIG. 7 illustrates a case in which the controller 10 in the motion control system 1 performs position control for the motor 30, where the first control device 51 serves as the position control device 51A. The servo amplifier 20 in the low-order system 2 performs speed control and current control after position control in the total position control (position, speed, and current control). Thus, the second control device 52 serves as the speed control device 52B in the servo amplifier 20. The power converter 23 has current control. Additionally, the current control is typical vector control.

In FIG. 7, the total position control mainly has the position control device 51A and a speed control system (including the speed control device 52B), and control is sequentially performed in the components.

The servo control command A3 as a result of position control by a position control device 52A is output from the controller 10 and is input into the servo amplifier 20 based on the motion control deviation A2 based on the motion control command A1 and the motion control response A4. The signal A8 obtained by differentiating the motion control response A4 based on a signal from the encoder 31 of the motor 30 by the differentiator 26 is acquired in the servo amplifier 20. The signal A5 obtained by computing the servo control command A3 and the signal A8 by the computing device 21 is input into the speed control device 52B in the servo amplifier 20. A signal A12 (current command value) as a result of computation of speed control and torque conversion is acquired in the speed control device 52B based on the signal A5.

In the first control mode, the control gain estimator 27 inputs therein the servo control command A3 and the motion control deviation A2, estimates a P gain of the position control device 51A, and stores/outputs the P gain as an estimated P gain (estimated control gain A10).

### [Second Control Mode: Speed Control]

FIG. 8 illustrates the first example of the functional block configuration in the second control mode in which the controller 10 has speed control. FIG. 8 illustrates, as the first example for the second control mode, a control configuration in which the controller 10 does not include a position control device and has only speed control (the speed control device 51B).

Further, as illustrated in FIG. 9, as the second example, the controller 10 may have a position-speed control system (the position control device 51A and the speed control device 51B) in the second control mode. In the second example, the first control device 51 serves as the speed control device 51B and the second control device 52 serves as the current control device 52C in a current control system 80. The functions for the second control mode are basically similar in the case of FIG. 8 and in the case of FIG. 9, and will be described below mainly with reference to FIG. 8.

Gain estimation in the second control mode is to estimate a gain of the speed control device 51B in the controller 10. The control devices for speed control and the like include the speed control device 51B and the current control system 80. The current control system 80 includes the computing device 22, the current control device 52C, and the power converter 23. The current control system 80 has a current control loop which is configured of typical vector control and in which computations such as orthogonal coordinate transformation and two-phase to three-phase transformation are performed. Only the loop is illustrated in FIG. 8 and the processing of orthogonal coordinate transformation, two-phase to three-phase transformation, and the like are not illustrated. The first control device 51 in the controller 10 is illustrated as the speed control device 51B in the second control mode. In the second control mode, the current control system 80 for current control is configured in the servo amplifier 20. The second control device 52 is illustrated as the current control device 52C.

A signal A4a from the encoder 31 of the motor 30, which passes through the servo amplifier 20, is differentiated by the differentiator 26 (26C) in the controller 10 to be a signal A4b indicating the position/speed of the motor 30, and the signal A4b as a motion control response is input into the computing device 11 in the controller 10. The computing device 11 computes a motion control command A21 and the signal A4b, a signal A22 corresponding to a motion control deviation is input as a computation result into the speed control device 51B. Speed control based on the signal A22 is computed in the speed control device 51B to be output as a servo control command A11.

The servo control command A11 is input into the current control system 80 in the servo amplifier 20. The servo control command A11 corresponds to a current command value. In the current control system 80, the computing device 22 computes the signal A11 and a signal A7b to generate the signal A12 as a computation result, which is input into the current control device 52C. In the current control device 52C, a signal A13 as a result of current control is acquired based on the signal A12 and is input into the power converter 23. The current control device 52C performs torque conversion. The signal A7b output from the power converter 23 corresponds to a three-phase to two-phase transformed current response value.

In the second control mode, the control gain estimator 27 inputs therein the signal A22 corresponding to a motion control deviation in front of the speed control device 51B and the signal A11 (servo control command) as a result of speed control in the speed control device 51B. The control gain estimator 27 estimates the control gain of the speed control device 51B by use of the signal A22 and the signal A11.

It should be noted that, the signal A22 and the signal A11 are input into the control gain estimator 27 in FIG. 8, but are not limited thereto and the signal A21 may be monitored and the monitored and acquired signal A21 may be transmitted to the control gain estimator 27 by use of the user interface 40.

In the second control mode, the control gain estimator 27 inputs the signal A22 and the signal A11 therein, estimates the control gain of the speed control device 51B, and stores/outputs it as the estimated control gain A10.

It should be noted that, the controller 10 includes a computing device 11A, the position control device 51A, a computing device 11B, and the speed control device 51B in this order from the input side in FIG. 9. The computing device 11A computes the motion control command A21 and the motion control response A4a to be the motion control deviation A22. The position control device 51A inputs the motion control deviation A22 therein, and outputs a signal A23 as a result of computed position control. The computing device 11B computes the signal A23 output from the position control device 51A and the signal A4b as a result of differentiation by the differentiator 26 (26C) to be a signal A24. The speed control device 51B inputs the signal A24 therein, and outputs, as the servo control command A11, a signal obtained by computing speed control. The control gain estimator 27 inputs the signal A24 and the servo control command A11 therein, and estimates the control gain of the speed control device 51B.

### [Process Flow In P Control]

P control for position control will be described. There will be described an example in which the first control device 51 serves as the position control device 51A and is for P control in FIG. 7. The control gain estimator 27 reads the servo control command A3 and the motion control deviation A2 from the memory resources (such as the memory 202 of FIG. 2), and performs a calculation processing in order to estimate the control gain of the first control device 51.

The user U1 selects the first control mode for position control (item 602) on the GUI screen as illustrated in FIG. 6 by use of the application 41 in the user interface 40, and selects P gain (item 603) as the control gain to be estimated according to the feedback control method. Accordingly, the control gain estimator 27 estimates the P gain of the position control device 51A (FIG. 7).

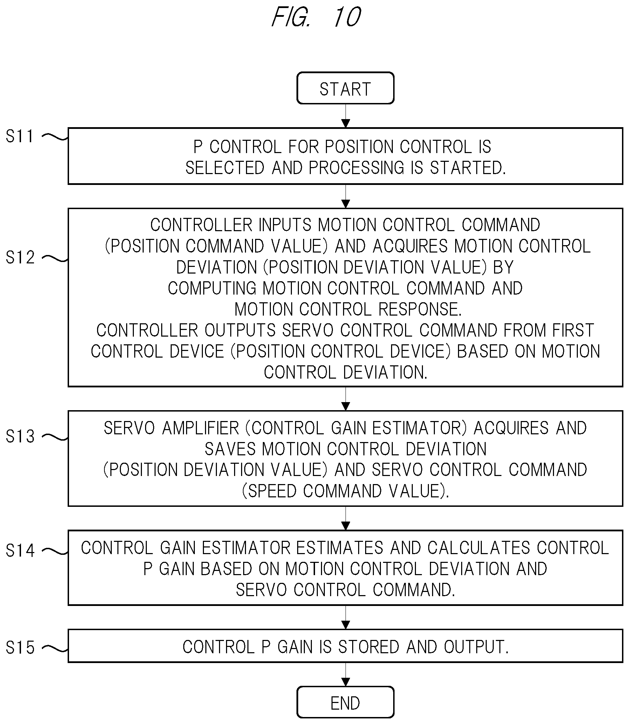

FIG. 10 illustrates a process flow of estimating, calculating, and deriving the P gain in P control for position control as an example of process flow by the control gain estimator 27. The process flow of FIG. 10 illustrates some processing operations in steps S11 to S15 among the possible processing operations by the control gain estimator 27 (substantially the processor 201 of FIG. 2) by way of example.

In step S11, P control for position control is selected and the estimation processing is instructed to start (button 604) on the GUI screen of FIG. 6 in response to an operation of the user U1, for example, by the control selection function of the servo amplifier 20 (part of the application 41 in the user interface 40).

In step S12, the controller 10 generates/inputs the motion control command A1 therein, and acquires the motion control deviation A2 as a result of computation of the motion control command A1 and the motion control response A4 (position response) . The motion control command A1 corresponds to a position command value. The motion control response A4 corresponds to a position response value. The motion control deviation A2 corresponds to a position deviation value.

The controller 10 outputs the servo control command A3 from the position control device 51A based on the motion control deviation A2. The servo control command A3 corresponds to a speed control command. The position deviation value is multiplied by the P gain in the position control device 51A to generate a speed command value.

In step S13, the control gain estimator 27 in the servo amplifier 20 acquires/inputs therein the motion control deviation A2 (position deviation value) and the servo control command A3 (speed command value) from the controller 10, and saves them in the memory resources. It should be noted that, the position deviation value and the speed command value may be monitored and acquired by the user interface 40 and the information thereof may be output to the user U1 as in FIG. 1 and the like.

In step S14, the control gain estimator 27 estimates the P gain of the position control device 51A by dividing the servo control command A3 (speed command value) by the motion control deviation A2 (position deviation value), and stores/outputs the estimated P gain, being an estimation result, as the estimated control gain A10. In other words, the estimated P gain is obtained as the value of the ratio [speed command value]/[position deviation value].

Thereafter, the servo amplifier 20 and the user U1 can arbitrarily use the estimated P gain. Particularly, the user U1 can confirm the estimated P gain (item 605) on the GUI screen (FIG. 6), and can adjust the control parameters in the servo amplifier 20 by use of the estimated P gain (button 607). For example, the parameters of the speed control device 52B of FIG. 7 and current control may be set at preferable values based on the estimated P gain. Even if the user U1 does not know the actual P gain of the position control device 51A in the controller 10 in the motion control system 1, the user U1 can preferably adjust the control parameters of the servo amplifier 20 by use of the estimated P gain.

### [Process Flow In PI Control]

PI control for position control will be described. There will be described an example in which the first control device 51 of FIG. 7 serves as the position control device 51A and is for PI control. The user U1 selects the first control mode for position control (item 602) on the screen as illustrated in FIG. 6 and selects PI gain as the control gain to be estimated (item 603) according to the feedback control method by the application 41 in the user interface 40. Further, PI gain includes P gain and I gain. The control gain estimator 27 estimates the PI gain. FIG. 7 illustrates the P gain and the estimated P gain, but in PI control, the PI gain (P gain and I gain) is set in the position control device 51A and the control gain estimator 27 estimates the PI gain (P gain and I gain).

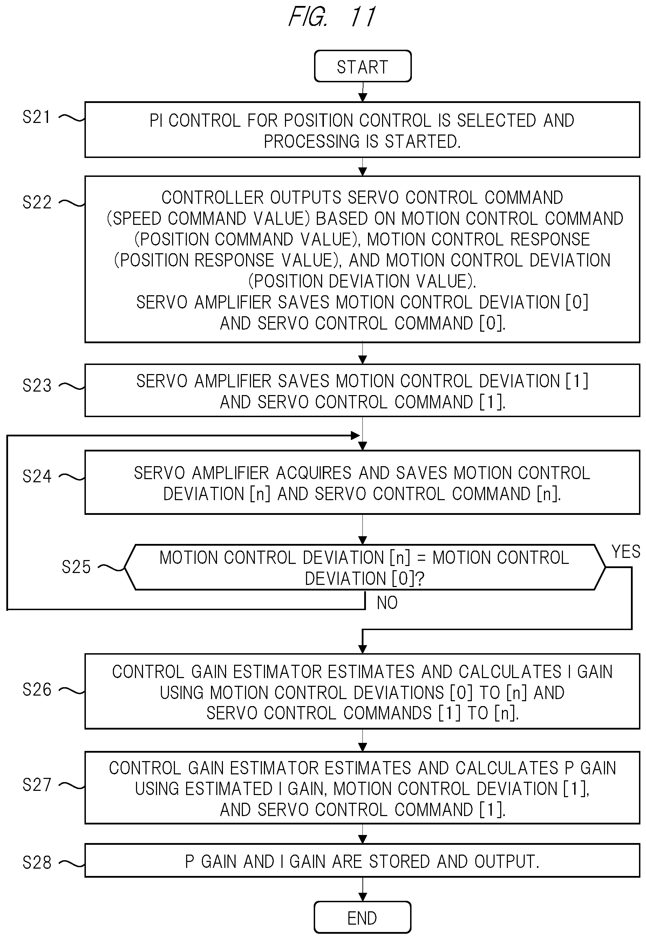

FIG. 11 illustrates a process flow of estimating, calculating, and deriving the PI gain in PI control for position control as an example of process flow by the control gain estimator 27. The flow of FIG. 11 illustrates some processing operations in steps S21 to S28 among the possible processing operations by the control gain estimator 27 (substantially the processor 201 of FIG. 2) by way of example.

In step S21, PI control for position control is selected by the control selection function of the servo amplifier 20, and the estimation processing is instructed to start.

In step S22, the controller 10 acquires a position deviation value as the motion control deviation A2 based on a position command value as the motion control command A1 and a position response value as the motion control response A4 similarly as described above. The controller 10 outputs a speed command value as the servo control command value A3 by the position control device 51A based on the position deviation value. The servo amplifier 20 inputs/acquires therein the position deviation value as the motion control deviation A2 and the speed command value as the servo control command value A3 from the controller 10, and saves them in the memory resources. In step S22, particularly at the initial timing or cycle (T = [0]), the control gain estimator 27 inputs/saves therein the motion control deviation [0] (= position deviation value [0]) and the servo control command [0] (= speed command value [0]). The timing or cycle is a temporal unit for feedback control.

In step S23, the control gain estimator 27 inputs/saves therein the motion control deviation [1] (= position deviation value [1]) and the servo control command [1] (=speed command value [1]) which are updated in the next cycle (T = [1]).

In the loop of step S24 and step S25, the control gain estimator 27 similarly inputs/saves the motion control deviation (= position deviation value) and the servo control command (= speed command value) at each cycle (T = [2], ..., [n]). Step S25 is a condition to terminate the loop, and is to determine whether the motion control deviation [n] is equal to the initial motion control deviation [0] at the last cycle (T = [n]). When the condition of step S25 is met (YES), the processing proceeds to step S26.

The mechanism to save the motion control deviation and the servo control command in the memory resources may be stored in the RAM in the servo amplifier 20, without specific details, for example.

Additionally, Expression 2 described below indicates an example of relationship between the position deviation value and the speed command value acquired up to step S25.

Next, in step S26, the control gain estimator 27 estimates the I gain (Ci in Expression 3) by applying, to Expression 3 described below, the motion control deviations [0] to [n] and the servo control commands [1] to [n] which are saved up to step S24.

In step S27, the control gain estimator 27 estimates the P gain (Cp in Expression 3) by applying the estimated I gain obtained in step S26 to Expression 4 described below by use of the motion control deviation [1] and the servo control command [1].

In step S28, the servo amplifier 20 stores the acquired estimated P gain and estimated I gain as the estimated control gain A10 in the memory resources, and outputs the estimated control gain A10. The servo amplifier 20 displays the estimated P gain and the estimated I gain (items 605 and 606) on the GUI screen (FIG. 6) to the user U1, for example.

Additionally, the estimation of the control gain by the control gain estimator 27 may start estimation processing either at the start of the servo control operation by the system 100 including the servo amplifier 20 or during the operation by use of the mechanism such as the same Expressions.

### [Expressions For Estimating Control Gain]

Expressions for PI control in the control gain estimation will be described below. Expression 1 to Expression 4 described below are for estimating the PI gain. Expression 1 indicates a relationship between the position deviation value (Perr) and the speed command value (v*). Expression 2 indicates a relationship of each cycle (such as T = [1]) based on Expression 1. Expression 3 indicates an expression for estimating the I gain (Ci). Expression 4 indicates an expression for estimating the P gain (Cp).
[Math. 1] $\begin{matrix}\left(θ*-θ\right) = {P}_{err} : θ = 0 \\ {P}_{err} {C}_{p} + {P}_{err} {C}_{i} + {C}_{iout} {z}^{- 1} = v *\end{matrix}$
[Math. 2] $\begin{matrix}\left[1\right] {P}_{err 1} {C}_{p} + {P}_{err 1} {C}_{i} + {P}_{err 0} {C}_{i} = {v}_{1}^{∗} \\ \left[2\right] {P}_{err 2} {C}_{p} + {P}_{err 2} {C}_{i} + {P}_{err 1} {C}_{i} + {P}_{err 0} {C}_{i} = {v}_{2}^{∗} \\ \left[3\right] {P}_{err 3} {C}_{p} + {P}_{err 3} {C}_{i} + {P}_{err 2} {C}_{i} + {P}_{err 1} {C}_{i} + {P}_{err 0} {C}_{i} = {v}_{3}^{∗} \\ : \\ : \\ \left[n\right] {P}_{errn} {C}_{p} + {P}_{errn} {C}_{i} + {\sum }_{k = 0}^{m = n - 1} {P}_{errm} {C}_{i} = {v}_{n}^{∗}\end{matrix}$
[Math. 3] $\begin{matrix}{v}_{1}^{∗} - {v}_{n}^{∗} = {P}_{err 0} {C}_{i} - {\sum }_{k = 0}^{m = n - 1} {P}_{errm} {C}_{i} \\ {C}_{i} = \frac{{v}_{1}^{∗} - {v}_{n}^{∗}}{{P}_{err 0} {C}_{i} - {\sum }_{k = 0}^{m = n - 1} {P}_{errm}}\end{matrix}$
[Math. 4] ${C}_{p} = \frac{{v}_{1}^{∗} - {P}_{err 1} {C}_{i} - {P}_{err 0} {C}_{i}}{{P}_{err 1}}$

The I gain (Ci) is found from the position deviation value and the speed command value. In Expression 2, a value of Perr1 is input at the first cycle (T = [1]) with the previous value of 0. The following Expression 5 is then derived. Assuming [1] to [n] at Perr1 = Perrn, Expression 6 is derived based on Expression 3. The input value Perrm and the output value vn are saved thereby to derive the I gain (Ci). After the I gain (Ci) is derived, Ci is substituted in [1] in Expression 6 thereby to derive the P gain (Cp). The PI gain can be estimated as described above.
[Math. 5] $\begin{matrix}\left[1\right] {P}_{err 1} {C}_{p} + {P}_{err 1} {C}_{i} + 0 = {v}_{1}^{∗} \\ \left[2\right] {P}_{err 2} {C}_{p} + {P}_{err 2} {C}_{i} + {P}_{err 1} {C}_{i} = {v}_{2}^{∗} \\ \left[3\right] {P}_{err 3} {C}_{p} + {P}_{err 3} {C}_{i} + {P}_{err 2} {C}_{i} + {P}_{err 1} {C}_{i} = {v}_{3}^{∗} \\ : \\ : \\ \left[n\right] {P}_{errn} {C}_{p} + {P}_{errn} {C}_{i} + {\sum }_{k = 0}^{m = n - 1} {P}_{errm} {C}_{i} = {v}_{n}^{∗}\end{matrix}$
[Math. 6] $\begin{matrix}{v}_{1}^{∗} - {v}_{n}^{∗} = - {\sum }_{k = 1}^{m = n - 1} {P}_{errm} {C}_{i} \\ {C}_{i} = \frac{{v}_{1}^{∗} - {v}_{n}^{∗}}{- {\sum }_{k = 1}^{m = n - 1} {P}_{errm}}\end{matrix}$

### [Use of Estimated Control Gain]

The information on the estimated control gain A10 acquired in the first embodiment can be arbitrarily used. Its exemplary use is as follows. The first example is to use the estimated control gain in order to set/adjust the parameters of the entire system 100 of FIG. 1. The user U1 may use the estimated control gain in order to set/adjust the control gain of the first control device 51 in the controller 10. Further, the user U1 may use the estimated control gain in order to set/adjust the control gain and the like of the second control device 52 (such as the speed control device 52B) in the servo amplifier 20.

The second example is to use the estimated control gain for other control. An example of the other control is damping control of the motor 30.

### [Effects and Others of First Embodiment]

As described above, in the first embodiment, the control parameters of the servo amplifier 20 can be adjusted in both the motion control system 1 and the low-order system 2 which are separately managed. In the first embodiment, the servo amplifier 20 in the low-order system 2 can estimate the control gain of the first control device 51 in the controller 10 in the motion control system 1. Thereby, the servo amplifier 20 or the user U1 can more easily adjust the control parameters of the system 100 including the servo amplifier 20 by use of the estimated control gain A10 than before, thereby more excellently adjusting the control parameters than before. As a result of adjustment, higher efficiency and higher response of the system 100 including the servo amplifier 20 can be easily implemented. Further, in the first embodiment, since the control gain can be estimated, even if the unit systems for the control parameters are different between the controller 10 and the like in the motion control system 1 and the servo amplifier 20 in the low-order system 2, the adjustment of the control parameters can be supplemented thereby to reduce extra steps such as manual adjustment.

There has been described above a new mechanism to estimate the control gain in the controller 10 in the motion control system 1 from the servo amplifier 20 in the low-order system 2 according to the first embodiment. In the past, the information such as the control gain in the controller 10 in the motion control system 1 was difficult or troublesome to refer to for the low-order system 2. In the first embodiment, the servo amplifier 20 in the low-order system 2 can estimate the control gain in the controller 10 in the motion control system 1. Further, in the past, when setting the control parameters (such as the control gain of the second control device 52) of the servo amplifier 20, the servo amplifier 20 in the low-order system 2 did not know the control gain of the first control device 51 in the controller 10 and the control parameters were difficult to adjust according to the motion control system 1. In the first embodiment, the control parameters can be excellently adjusted according to the motion control system 1 by use of the estimated control gain.

### [Modification: Full-Closed Control Structure]

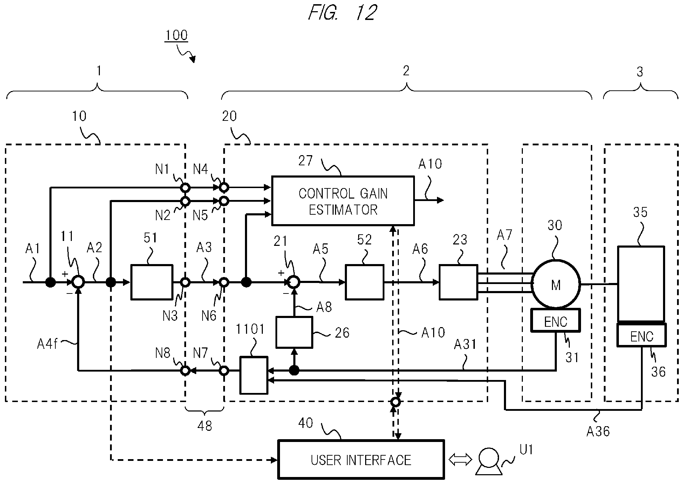

FIG. 12 illustrates a full-closed control structure as a modification of the first embodiment. In the full-closed control structure, the servo amplifier 20 acquires a signal A36 output from an external encoder 36 attached to the apparatus 35 to be controlled in the system 3 to be controlled. The servo amplifier 20 includes a combiner 1101. The combiner 1101 combines a signal A31 output from the encoder 31 of the motor 30 and the signal A36 output from the external encoder 36, and outputs the combined signal as the motion control response A4. The combined signal is obtained by computing the position response of the motor 30 and the position response of the apparatus 35 to be controlled, for example. The controller 10 inputs therein, as a feedback signal, a motion control response A4f as a result of the combination, and generates the motion control deviation A2 similarly as described above. The control gain estimator 27 estimates the control gain of the first control device 51 by use of the servo control command A3 and, for example, the motion control deviation A2 similarly as describe above. Similar effects to those of the first embodiment are obtained also in the modification of FIG. 12.

### [Modification: Sensor-Less Control]

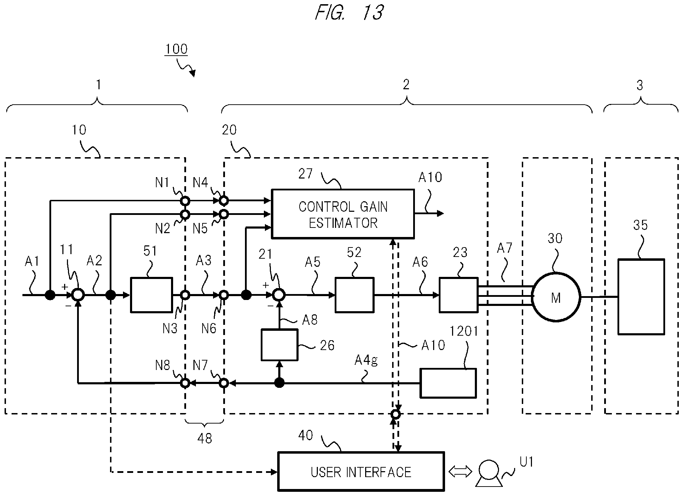

A control structure with an encoder in which the encoder 31 is attached to the motor 30 has been described in the first embodiment of FIG. 1. Not limited thereto, a structure in which the encoder 31 is not attached to the motor 30, or a sensor-less control structure may be employed as a modification. FIG. 13 illustrates a sensor-less control structure as a modification of the first embodiment. In this structure, an encoder is attached to neither the motor 30 nor the apparatus 35 to be controlled. In this structure, the servo amplifier 20 includes a sensor-less control device 1201 in addition to the above-described components. The sensor-less control device 1201 computes the position response of the motor 30, and outputs a signal indicating the computed position response, being a computed result, as a motion control response A4g. The controller 10 inputs therein the motion control response A4g as a feedback signal, and generates the motion control deviation A2 similarly as described above. The servo amplifier 20 generates the signal A8 obtained by differentiating the motion control response A4g by the differentiator 26, and inputs the signal A5 obtained by computing the servo control command A3 and the signal A8 into the second control device 52. The control gain estimator 27 estimates the control gain of the first control device 51 by use of the servo control command A3 and, for example, the motion control deviation A2 similarly as describe above. Similar effects to those of the first embodiment are obtained also in the modification of FIG. 13.

### <Second Embodiment>

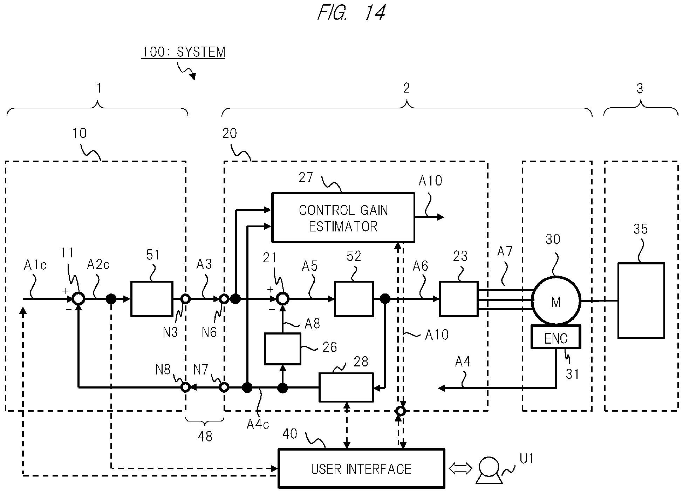

A motor control apparatus and the like according to a second embodiment will be described with reference to FIG. 14 and the like. The basic components of the second embodiment are similar to those of the first embodiment, and different components between the first embodiment and the second embodiment will be mainly described below.

The second embodiment includes the following components largely different from those of the first embodiment. In the second embodiment, the motion control command A1 (such as a position control command) in the controller 10 is intentionally set at zero, and the servo amplifier 20 arbitrarily operates the motion control response A4. The zero motion control command A1 is assumed as a motion control command A1c. The operated motion control response A4 is assumed as an operated motion control response A4c. In other words, the zero motion control command A1 is a signal always having a zero value (or off signal) in time series. Further, the zero value may be a constant value such as a predetermined reference value or an offset value.

There will be described, according to the second embodiment, an example in which the control gain of the first control device 51 in the controller 10 is estimated in P control for position control in the semi-closed control structure similarly as in the first embodiment.

### [System Including Motor Control Apparatus]

FIG. 14 illustrates a configuration of the system 100 including the servo amplifier 20 as a motor control apparatus according to the second embodiment. In the configuration of FIG. 14, a motion response operator 28 is provided in the servo amplifier 20 in addition to the components similar to those of the first embodiment.

The motion response operator 28 is directed toward arbitrarily operating the value of the motion control response A4 as a signal output from the encoder 31 of the motor 30, and generating and outputting the operated motion control response A4c to the controller 10.

The second embodiment has a predetermined control mode of setting the value of the motion control command A1 at zero and arbitrarily operating the motion control response A4. The user U1 can select the control mode ("form=2") on the GUI screen (item 601 of FIG. 6) by use of the application 41 in the user interface 40. Assuming the functions of the first embodiment as "form=1", the control mode of the second embodiment can be set as "form=2." The name of the control mode "form=2" may be arbitrarily determined as "zero command mode," "response operation mode," or the like.

In the control mode of the second embodiment, the value of the motion control command A1 is set at zero. Various ways to set the value of the motion control command A1 at zero may be employed and the following way is applicable, for example. The servo amplifier 20 or the application 41 in the user interface 40 may request the controller 10 to set the value of the motion control command A1 at zero. In response to the request, the controller 10 sets the motion control command A1 at zero. The system 100 may include such a mechanism for information processing. Alternatively, the user U1 as a supplier may request a manager of the controller 10 in the motion control system 1 to set the value of the motion control command A1 at zero. In response to the request, the manager operates the controller 10 to set the value of the motion control command A1 at zero. The setting may be manually performed in this way.

Further, in the control mode, commands similar to the commands input from the servo amplifier 20 into the motor 30 are input into the motion response operator 28. For example, the servo amplifier 20 inputs the signal A6 output from the speed control device 52B as the second control device 52 into the motion response operator 28. In response to the signal A6, the motion response operator 28 operates the motion control response A4 output from the motor 30 and outputs the operated motion control response A4c.

Any operations by the motion response operator 28 may be previously defined by program processing or may be defined as instructions/settings by the user U1 via the application 41 in the user interface 40. Further, the application 41 in the user interface 40 may monitor how the operated motion control response A4c is operated in the motion response operator 28.

The motion response operator 28 generates the operated motion control response A4c arbitrarily operated in a possible range. Additionally, the actual motion control response A4 from the motor 30 is used in the functions and the control modes of the first embodiment.

The operated motion control response A4c can be obtained as an equal value to the signal A8 output from the differentiator 26 in the servo amplifier 20.

The controller 10 inputs the operated motion control response A4c therein, and the computing device 11 computes the zero motion control command A1c and the operated motion control response A4c and outputs a motion control deviation A2c as a computation result. The first control device 51 such as the position control device 51A outputs the servo control command A3 based on the motion control deviation A2c. The servo amplifier 20 inputs the servo control command A3 therein, and the differentiator 26 outputs the signal A8 obtained by differentiating the operated motion control command A4c. The computing device 21 computes the servo control command A3 and the signal A8 and outputs the signal A5 as a computation result. The second control device 52 such as the speed control device 52B outputs the signal A6 based on the signal A5. The signal A6 is input into the motion response operator 28.

To the contrary, the control gain estimator 27 inputs therein the operated motion control response A4c in addition to the servo control command A3, and stores them in the memory resources. In the second embodiment, the control gain estimator 27 does not have to input/acquire the motion control deviation A2. This is because the operated motion control response A4c corresponds to the contents of the motion control deviation A2. The control gain estimator 27 estimates the control gain of the first control device 51 in the controller 10 by use of the operated motion control response A4c and the servo control command A3, and stores/outputs the estimated control gain A10. Thereby, in the second embodiment, the servo amplifier 20 can estimate the control gain of the first control device 51 without the need to monitor and acquire the motion control deviation A2 from the controller 10.

### [Process Flow In Second Embodiment]

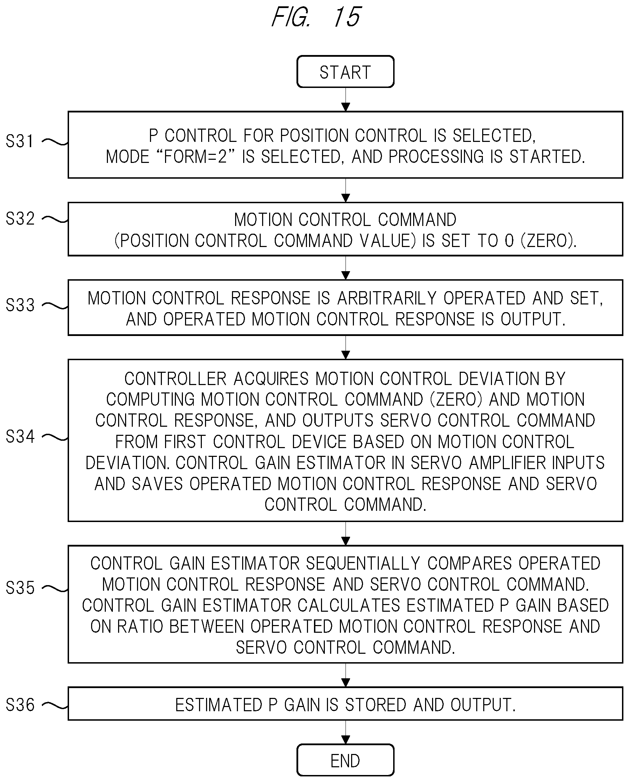

FIG. 15 illustrates an example of process flow of estimating the control gain by the control gain estimator 27 in the control mode in the second embodiment. This example illustrates estimation of the P gain in P control for position control.

At first, in step S31, the control mode "form=2" is selected, P control for position control is selected, and the estimation processing is input to start.

In step S32, the servo amplifier 20 (or the user U1) sets the position control command value as the motion control command A1 of the controller 10 at zero.

In step S33, the motion response operator 28 in the servo amplifier 20 generates/sets and outputs the operated motion control response A4c as a value for arbitrarily operating the motion control response A4 (such as position response) based on the signal A6.

In step S34, in the controller 10, the computing device 11 computes the zero motion control command A1 and the operated motion control response A4c and outputs the motion control deviation A2, and the position control device 51A as the first control device 51 outputs the servo control command A3 based on the motion control deviation A2. The control gain estimator 27 in the servo amplifier 20 inputs the operated motion control response A4c and the servo control command A3 therein, and saves them in the memory resources.

In step S35, the control gain estimator 27 sequentially compares the servo control command A3 and the operated motion control response A4c. The control gain estimator 27 calculates the estimated P gain based on the ratio between the operated motion control response A4c and the servo control command A3 which are compared. The ratio is obtained as [value of A4c]/[value of A3]. The ratio is obtained as the estimated P gain.

In step S36, the servo amplifier 20 stores/outputs the estimated P gain.

### [Effects and Others of Second Embodiment]

In the second embodiment, the motion control response A4 can be arbitrarily operated and the control gain of the controller 10 in the motion control system 1 can be estimated only by the servo amplifier 20. The value of the motion control command A1 has only to be set at zero in the controller 10 in the motion control system 1, and other operations/works are not required. Thus, the steps required for estimating the control gain can be reduced.

Additionally, the second embodiment has been described assuming that the functions in the control mode "form=2" are added to the functions of the first embodiment, but is not limited thereto and only the functions in the control mode may be mounted.

### [Modification: Pseudo Driving Mode]

Arbitrary operations of the motion control response A4 in the second embodiment may be assumed as operations for pseudo driving of the motor 30, for example. In a modification of the second embodiment, the servo amplifier 20 is provided with a pseudo driving module (or pseudo motor section) for performing processing for pseudo driving of the motor 30. The pseudo driving module is like input/output of the motor 30, and is directed toward obtaining pseudo output from the motor 30 (or pseudo motion control response). The pseudo driving module is implemented by calculations and program processing by the processor in the servo amplifier 20. In the modification, a mode of performing pseudo driving of the motor 30 (described as "pseudo driving mode," for example) is provided as one of the control modes.

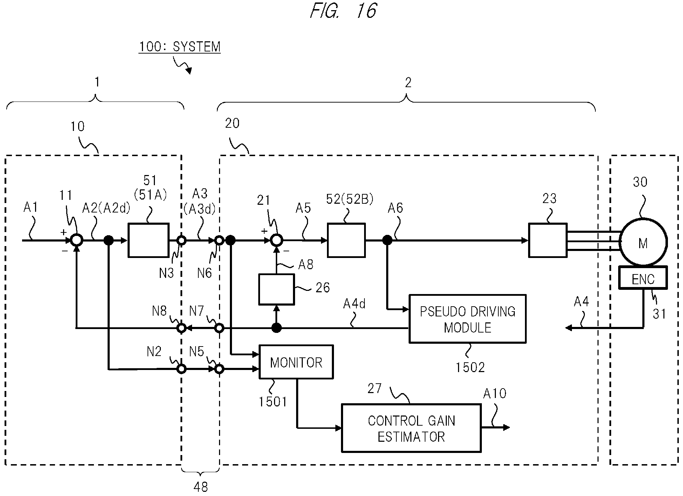

FIG. 16 illustrates a functional block configuration example in the pseudo driving mode in the modification of the second embodiment. The example of FIG. 16 illustrates P control for position control. The first control device 51 in the controller 10 serves as the position control device 51A and the second control device 52 in the servo amplifier 20 serves as the speed control device 52B.

The servo amplifier 20 includes a monitor 1501 and a pseudo driving module 1502. The monitor 1501 monitors the motion control deviation A2 in the controller 10 and the servo control command A3 output from the controller 10. For example, the motion control deviation A2 output from the output terminal N2 of the controller 10 is input into the monitor 1501 from the input terminal N5. Further, the servo control command A3 output from the output terminal N3 of the controller 10 is input into the monitor 1501 from the input terminal N6. The monitor 1501 saves the monitored and acquired motion control deviation A2 and servo control command A3 in the memory resources, and provides them to the control gain estimator 27. The control gain estimator 27 estimates the control gain of the first control device 51 in the controller 10, for example, the control gain of the position control device 51A by use of the monitored motion control deviation A2 and servo control command A3, and stores and outputs the estimated control gain A10.

In the modification, the control is performed by pseudo driving of the motor 30 in the pseudo driving mode as one control mode not by use of response output (the motion control response A4) from the motor 30 but by use of the pseudo driving module 1502. The pseudo driving module 1502 is implemented when the processor simulates the operations of the motor 20.

The pseudo driving module 1502 inputs therein the signal A6 based on the servo control command A3 and output from the second control device 52 such as the speed control device 52A, and generates and outputs the pseudo motion control response A4 (pseudo motion control response A4d) like response output (the motion control response A4) from the motor 30 based on calculation of pseudo driving of the motor 30.

The controller 10 inputs the pseudo motion control response A4d therein, and the computing device 11 computes the motion control command A1 and the pseudo motion control response A4d, and generates the pseudo motion control deviation A2 (pseudo motion control deviation A2d) as a computation result. The first control device 51 such as the position control device 51A outputs the pseudo servo control command A3 (pseudo servo control command A3d) based on the pseudo motion control deviation A2d.

To the contrary, the servo amplifier 20 generates the signal A8 obtained by differentiating the pseudo motion control response A4d by the differentiator 26, and the computing device 21 computes the pseudo servo control command A3d and the signal A8 to acquire the signal A5 as a computation result. The second control device 52 such as the speed control device 52B outputs the speed-controlled signal A6 based on the signal A5. Subsequently, pseudo driving of the motor 30 and its corresponding servo control are similarly performed in time series via the pseudo driving module 1502.

Additionally, the motor 30 does not need to be actually driven in the pseudo driving mode. Thus, the signal A7 does not need to be actually supplied to the motor 30. For example, the servo amplifier 20 turns off the signal A7 or turns off the switches for the processing after the computing device 22 in the program processing.

During the pseudo driving, the control gain estimator 27 estimates the control gain of the first control device 51, for example, the control gain of the position control device 51A. Note that, the user interface 40 and the like are not illustrated in FIG. 16, but the monitoring values, the estimated control gain A10, and the like may be output to the user U1 by use of the application 41 in the user interface 40 similarly as described above. Further, the pseudo driving module 1502 may be set or its state may be output by use of the application 41 in the user interface 40.

In the modification, the control gain of the controller 10 can be estimated based on the pseudo driving of the motor 30 without the need to drive the motor 30.

Additionally, the pseudo driving module 1502 according to the modification of FIG. 16 may be incorporated in the motion response operator 28 according to the second embodiment of FIG. 14. In this case, the motion response operator 28 generates the operated motion control response A4c based on the pseudo driving of the pseudo driving module 1502.

### <Other modification>

Other modification may be employed as described below. The user interface 40 of FIG. 1 and the application 41 of FIG. 3 may be incorporated in the servo amplifier 20 or may be partially incorporated in the motion control system 10. For example, the supplier installs a monitoring program for monitoring information and signals (such as the motion control deviation A2 and the motion control command A1) in the controller 10 under the client' permission. The monitoring program functions as a monitor in response to the processing by the processor. The monitor monitors the signal of the motion control deviation A2 and transmits it to the servo amplifier 20 or the application 41, for example. Thereby, the servo amplifier 20 or the application 41 can monitor and acquire the signal of the motion control deviation A2, for example.

The embodiments according to the present disclosure have been described above, but the present disclosure is not limited to the above embodiments and may be variously modified without departing from the spirit of the disclosure. Components in each embodiment other than essential components may be added, deleted, or replaced. Each component may be single or plural unless particularly limited. A combination of embodiments may be employed.

### EXPLANATION OF REFERENCE CHARACTERS

1: Motion control system, 2: Low-order system, 3: System to be controlled, 10: Controller, 11: Computing device, 20: Servo amplifier, 21: Computing device, 23: Power converter, 26: Differentiator, 27: Control gain estimator, 30: motor, 31: Encoder, 35: Apparatus to be controlled, 40: User interface, 51: First control device, 52: Second control device, U1: User, A1: Motion control command, A2: Motion control deviation, A3: Servo control command, A4: Motion control response, A10: Estimated control gain

## Claims

1. A motor control apparatus configured to drive and control a motor in response to a servo control command from a motion control system,
wherein the motion control system comprises a first control device in which a first control gain for servo control is set, inputs, into the first control device, a motion control deviation obtained by computing a motion control command and a motion control response based on a signal from the motor, and outputs the servo control command based on the first control gain,
the motor control apparatus comprises:
a second control device for the servo control;
a power converter configured to generate a signal for driving the motor; and
a control gain estimator configured to estimate the first control gain of the first control device,
wherein the motor control apparatus inputs a signal based on the servo control command and the motion control response into the second control device, inputs a signal output from the second control device into the power converter, and supplies the motor with a signal output from the power converter, and
wherein the control gain estimator inputs the servo control command and the motion control deviation or the motion control command therein, estimates the first control gain, and outputs an estimated first control gain as an estimation result.

2. The motor control apparatus according to Claim 1, comprising:
an application which is implemented as a user interface by a calculator connected to or incorporated in the motor control apparatus,
wherein the application outputs the estimated first control gain to a user.

3. The motor control apparatus according to Claim 1, comprising:
an application which is implemented as a user interface by a calculator connected to or incorporated in the motor control apparatus,
wherein the application monitors the motion control deviation or the motion control command from the motion control system, and outputs the monitored motion control deviation or the monitored motion control command to a user.

4. The motor control apparatus according to Claim 1,
wherein the servo control has position control or speed control for the motion control system,
the motor control apparatus comprises an application which is implemented as a user interface by a calculator connected to or incorporated in the motor control apparatus,
wherein the application selects and sets the servo control from the position control and the speed control in response to an operation of a user, and
wherein the control gain estimator estimates the first control gain corresponding to selected servo control.

5. The motor control apparatus according to Claim 1,
wherein a feedback control method for the servo control has proportion control (P control) and proportional-integral control (PI control),
the motor control apparatus comprises an application which is implemented as a user interface by a calculator connected to or incorporated in the motor control apparatus,
wherein the application selects and sets a feedback control method for the servo control from the P control and the PI control in response to an operation of a user, and
wherein the control gain estimator estimates the first control gain corresponding to selected servo control.

6. The motor control apparatus according to Claim 1,
wherein, when the servo control has position control for the motion control system,
the first control device is a position control device, and
the second control device is a speed control device.

7. The motor control apparatus according to Claim 1,
wherein, when the servo control has speed control for the motion control system,
the first control device is a speed control device, and
the second control device is a current control device.

8. The motor control apparatus according to Claim 1,
wherein a feedback control method for the servo control is proportion control (P control), and
wherein the control gain estimator estimates a P gain as the first control gain by a ratio obtained by dividing a value of the servo control command by a value of the motion control deviation as a processing for the P control.

9. The motor control apparatus according to Claim 1,
wherein a feedback control method for the servo control is proportional-integral control (PI control),
wherein, as a processing for the PI control, the control gain estimator
saves and sequentially compares the servo control command and the motion control deviation per cycle,
keeps saving them until a value of the motion control deviation at a current cycle is equal to the motion control deviation at an initial cycle,
estimates an I gain configuring the first control gain according to the servo control command and the motion control deviation until a cycle that is equal to it, and
estimates a P gain configuring the first control gain according to an estimated I gain.

10. The motor control apparatus according to Claim 1, comprising:
a motion response operator configured to set a value of the motion control command at zero and to operate the motion control response,
wherein the motion response operator generates an operated motion control response instead of the motion control response according to a signal output from the second control device, and outputs thereof as the operated motion control response to the motion control system,
wherein the motion control system outputs the servo control command according to the operated motion control response, and
wherein the control gain estimator estimates the first control gain according to the servo control command and the operated motion control response.

11. The motor control apparatus according to Claim 1, comprising:
a pseudo driving module configured to calculate pseudo driving for input/output of the motor,
wherein the pseudo driving module generates a motion control response by the pseudo driving instead of the motion control response according to a signal output from the second control device, and outputs thereof as a pseudo motion control response to the motion control system,
wherein the motion control system outputs the servo control command from a pseudo motion control deviation according to the pseudo motion control response, and
wherein the control gain estimator estimates the first control gain according to the servo control command and the pseudo motion control deviation.

12. A motor control method executed by a motor control apparatus configured to drive and control a motor according to a servo control command from a motion control system,
wherein the motion control system comprises a first control device in which a first control gain for servo control is set, inputs, into the first control device, a motion control deviation obtained by computing a motion control command and a motion control response based on a signal from the motor, and outputs the servo control command based on the first control gain,
the motor control apparatus comprises:
a second control device for the servo control;
a power converter configured to generate a signal for driving the motor; and
a control gain estimator configured to estimate the first control gain of the first control device,
the motor control method comprising:
the motor control apparatus inputting a signal based on the servo control command and the motion control response into the second control device, inputting a signal output from the second control device into the power converter, and supplying the motor with a signal output from the power converter, and
the control gain estimator inputting the servo control command and the motion control deviation or the motion control command, estimating the first control gain, and outputting an estimated first control gain as an estimation result.
